# EUROPEAN PATENT APPLICATION

(11) **EP 3 751 052 A1**
(43) Date of publication of application: **16.12.2020**
(21) Application number: 20177356.1
(22) Date of filing: 29.05.2020
(51) Int. Cl.: D21H 11/14, D21H 17/01, D21H 17/02, D21H 27/10

(54) **METHOD FOR MANUFACTURING PAPER AND/OR CARDBOARD FROM NUTSHELL FLOUR**

(30) Priority: 11.06.2019 ES 201930527
(71) Applicant: Iberboard Mill, S.L., 43460 Alcover (Tarragona) (ES)
(72) Inventor: VILA TORRAS, Juan, 43460 ALCOVER (Tarragona) (ES)
(74) Representative: Ungria López, Javier

(57) **Abstract**

The present invention relates to a method for manufacturing paper and/or cardboard which comprises adding in a first mixing step cellulose fibre and water, between 1 and 20 % by weight with respect to the total weight of cellulose fibre used, of nutshell flour and, preferably, hazelnut flour, almond flour, or a combination of the two, with a particle size preferably comprised between 50 and 100 microns. Another object of the invention is paper and/or cardboard obtained from said method, characterised in that it has a density comprised between 0.63 and 0.68 kg/I at ambient temperature.

## Description

### SECTOR OF THE ART

The present invention belongs to the technical field of the paper and/or cardboard manufacturing industry.

### BACKGROUND OF THE INVENTION

Conventional methods of manufacturing recycled paper and/or cardboard start in a device known as a pulper, wherein the recovered paper bales are mixed with water under stirring with a propeller until the cellulose fibres are disintegrated. The obtained mixture is sent to a tank and, from there, to a series of sieves and other devices to remove impurities such as plastics, sand or other non-cellulosic materials. Once the mixture is clean of foreign materials, process chemical products that aid drainage or improve final product strength, such as starches, biocides and other additives normally used in the manufacture of paper, are added. Next, the mixture is drained on a continuous table or fourdrinier, giving rise to a continuous sheet that is pressed and then dried using steam dryer cylinders therein. The dry sheet reaches the end of the paper machine, where it is rolled up for sale or further processing.

In the case of not using recycled paper, the paper manufacturing method is the same, with the difference being that only virgin fibre is used as raw material for the method where, by not having so many impurities, it requires fewer special sieves for filtering.

Different inventions relating to methods for recycling paper have been found in the state of the art. Thus, for example, international application WO2019/056139 relates to a method for manufacturing recycled paper from wet paper pulp that is subjected to a treatment until obtaining a powder which is added to a surface on which an adhesive is applied, giving rise to recycled paper without the need to add other compounds or carry out another series of treatments that are common in conventional methods for manufacturing paper, such as obtaining paper pulp, washing the same or treating the same to remove ink.

Application CA3033181, in turn, relates to a method for manufacturing paper or cardboard which comprises preparing a suspension of recycled cellulose fibres, with a conductivity of at least 1.5 mS/cm, as well as adding a copolymer and inorganic silicon microparticles, sequentially or simultaneously.

To date, however, there is no known method for manufacturing paper and/or cardboard which makes it possible to use a product hitherto discarded or hardly used and, at the same time, obtain a paper and/or cardboard having a lower density compared to the paper or cardboard obtained in conventional manufacturing methods, likewise maintaining the desired stiffness properties for the final application thereof.

### DESCRIPTION OF THE INVENTION

Therefore, a first object of the invention is a method for manufacturing paper and/or cardboard which comprises adding in the first step of the method, which corresponds to the preparation of a pulp by mixing cellulose fibre from recycled or virgin paper and/or cardboard with water (in an approximate ratio of 4-12 g of cellulose fibre per 100 g of water), between 1 and 20 % by weight and preferably between 5 and 10 % by weight with respect to the total weight of cellulose fibre used in the method, of nutshell flour, preferably, hazelnut and/or almond flour, giving rise to a mixture that continues the method according to the conventional steps of manufacturing paper and/or cardboard. In a preferred embodiment, the nutshell flour is hazelnut flour. Furthermore, in even more preferred embodiments of the present invention, the amount of nutshell flour is between 5 % and 8 % by weight with respect to the total weight of cellulose fibre. In other also more preferred embodiments, the amount of nutshell flour is between 6 % and 8 % by weight with respect to the total cellulose fibre.

In embodiments of the present invention, the nutshell flour and the cellulose fibre is mixed at a temperature between 75 °C and 95 °C, in more preferred embodiments, between 85 °C and 95 °C, and in an even more preferred embodiment, mixing is performed at a temperature of 90 °C. This mixing step lasts from 40 seconds to 120 seconds. In a more preferred embodiment, the duration is between 50 seconds and 80 seconds, and in an even more preferred embodiment, the duration of the mixing step is 60 seconds. Therefore, the pulp obtained in the initial mixing step is sent to at least one storage tank. In a particular embodiment in which the paper and/or cardboard is reused paper and/or cardboard, after the storage tank, the pulp will be sent to at least one system for sieving or removing impurities, such as plastics, sand or other non-cellulosic materials.

Once cleaned of impurities, the mixture is subjected to a chemical process of adding the additives commonly used in the method for manufacturing paper and/or cardboard, which include compounds such as biocides, anti-foaming agents, flocculants, descaling agents, starch and others, in the amounts required by the machinery used in the method, the quality of the fibres and the conditions of the method, as well as the requirements of the final product, being known to any expert in the field.

Next, the mixture is drained on a continuous table or fourdrinier, giving rise to a continuous sheet that is pressed and subsequently dried by using a drying device that can be steam drying cylinders wherein the moisture content is preferably reduced to an absolute moisture value of 5 to 8 %, and preferably 6.5 %, measured at ambient temperature (21 °C). The dry sheet reaches the end of the paper machine, where it can be rolled up for sale or further processing.

In a preferred embodiment of the invention, the method may comprise a preliminary initial step of preparing the nutshell flour by grinding until obtaining flour with a particle size preferably comprised between 50 and 100 microns. This size has been shown to achieve an optimal effect, without the grain size affecting the smoothness of the paper/cardboard surface.

Another object of the invention is a paper and/or cardboard obtained from a method as previously described, which is characterised in that it has a density preferably comprised between 0.63 and 0.68 kg/I (at ambient temperature, 21 °C), less than the usual density of approximately 0.71 kg/I, although it maintains the appropriate stiffness properties for the final application thereof. This is one of the main advantages of the invention, since it enables the density of the paper and/or cardboard to be reduced by between 1 and 12 % by weight, according to the amount added, without losing the optimal properties of the paper with respect to the stiffness value thereof.

In a particular embodiment in which the product is cardboard, it is possible to reduce the density by a ratio of 1 to 2 % by weight for every 3 % by weight of nutshell flour added. Therefore, the amount of cellulose fibre consumed per unit of final product is reduced by the same proportion as the density values of the paper and/or cardboard obtained in the method are reduced, thus achieving economic savings of raw material.

Another advantage of the claimed method is that the drying of the paper and/or cardboard in the drying device is faster, which implies lower steam consumption. In particular, steam consumption is approximately equal to half the amount of shell flour added in the method. Thus, for example, if a percentage of 10 % by weight of flour is added, steam consumption is reduced by 5 % by weight.

The described method is especially advantageous, since it enables using a material that until now was used exclusively for heating poultry or pig farms during the winter. Therefore, it is possible to use a product that until now has been hardly used or discarded, which contributes to a significant environmental and economic improvement.

Furthermore, it should be noted that thanks to the temperature at which the step of mixing the nutshell flour is carried out, the resulting cardboard and/or paper does not cause allergies in users or employees who come into contact with said material.

### PREFERRED EMBODIMENT OF THE INVENTION

In order to test the effectiveness of the invention, the claimed method has been carried out in two conventional cardboard production factories, obtaining similar results in both.

In particular, in the first step of the method carried out, 8 % by weight of the weight of the cellulose fibre of hazelnut shell flour (with a particle size of less than 100 microns) was added to the mixture of recycled cardboard and water (in a ratio of approximately 4 g of cellulose fibre per 100 g of water). Next, the obtained mixture continued the method according to the conventional steps of manufacturing cardboard. In particular, it was subjected to a sieving step wherein the impurities present in the mixture were removed. Subsequently, chemical additives common in the cardboard manufacturing method were added (between 0.01 and 0.10 % by weight of biocide and between 0.05 and 0.20 % by weight of starch). Lastly, the mixture was subjected to a method of draining, pressing and drying wherein the moisture content was reduced to a moisture value of 6.5 % measured at ambient temperature (21 °C).

The cardboard obtained in the method was shown to have a density value of 0.65 kg/I, 3 % by weight lower than the usual density value of the cardboard obtained by a conventional manufacturing method. It was also shown that, although the density value had been reduced in a proportion equivalent to the addition of hazelnut shell flour, the cardboard obtained had optimal stiffness properties. Lastly, it was shown that, thanks to the addition of hazelnut shell flour, the duration of the cardboard drying step was reduced by 4 %. This implies an increase in production of 4 % and a reduction of 4 % in steam consumption per unit of cardboard produced.

The same method was carried out by adding 10 % by weight of hazelnut shell flour, showing that the density value of the paper obtained in the method was reduced by 6.5 % by weight with respect to the density value of the paper without the addition of the hazelnut shell flour.

## Claims

1. A method for manufacturing paper and/or cardboard which comprises adding in a first mixing step cellulose fibre and water, between 1 and 5 % by weight with respect to the total weight of cellulose fibre used, of nutshell flour, and wherein said mixture is performed at a temperature between 75 °C and 95 °C, for 40 seconds to 120 seconds.

2. The method according to claim 1, wherein the nutshell flour is hazelnut flour, almond flour, or a combination of the two.

3. The method according to claim 1 or 2, wherein said method comprises a preliminary initial step of preparing the nutshell flour by grinding until obtaining flour with a particle size comprised between 50 and 100 microns.

4. A recycled paper and/or cardboard obtained from a method as described in any one of claims 1 to 3, **characterised in that** it has a density comprised between 0.63 and 0.68 kg/I at ambient temperature.
